# DEMANDE DE BREVET EUROPEEN

(11) **EP 1 073 190 A1**
(43) Date de publication de la demande: **31.01.2001**
(21) Numéro de dépôt: 00410087.1
(22) Date de dépôt: 28.07.2000
(51) Int. Cl.: H02M 7/217

(54) **Convertisseur alternatif-continu non-isolé**

(30) Priorité: 30.07.1999 FR 9910088
(71) Demandeur: STMicroelectronics SA, 94250 Gentilly (FR)
(72) Inventeur: Peron, Benoît, 37100 Tours (FR)
(74) Mandataire: de Beaumont, Michel

(57) **Abrégé**

L'invention concerne un convertisseur recevant une tension alternative (Vac) entre une borne d'entrée et une borne de référence et fournissant deux tensions continues de polarités opposées (V+, V-) aux bornes d'un premier (C1) et d'un deuxième (C2) condensateur. Le convertisseur comprend un premier interrupteur (K) entre la borne d'entrée (11) et un noeud (13) du circuit ; un troisième condensateur (C3), connecté, en parallèle avec le premier condensateur, entre ledit noeud et la borne de référence (12) ; un moyen de circuit comprenant un deuxième interrupteur (K') pour connecter en série les deuxième et troisième condensateurs (C3) quand le deuxième interrupteur (K') est fermé ; et un circuit de commande (15) pour fermer le premier interrupteur seulement au début et à la fin d'alternances de polarité donnée, le premier interrupteur étant ouvert quand le deuxième interrupteur est fermé.

## Description

La présente invention concerne le domaine des alimentations non-isolées, destinées à fournir une basse tension continue à partir d'une haute tension alternative. Ces alimentations, également appelées convertisseurs de puissance, se retrouvent dans la plupart des appareils électrodomestiques, par exemple des machines à laver, pour l'alimentation de circuits basse tension tels que, par exemple, des circuits logiques (microprocesseurs, logiques programmables), des circuits de commande d'actionneurs électromécaniques (relais) ou électroniques (triacs), etc..

La présente invention concerne plus particulièrement les convertisseurs destinés à délivrer deux tensions continues dont l'une est positive et l'autre négative par rapport à un point de référence constituant également une référence pour l'alimentation alternative.

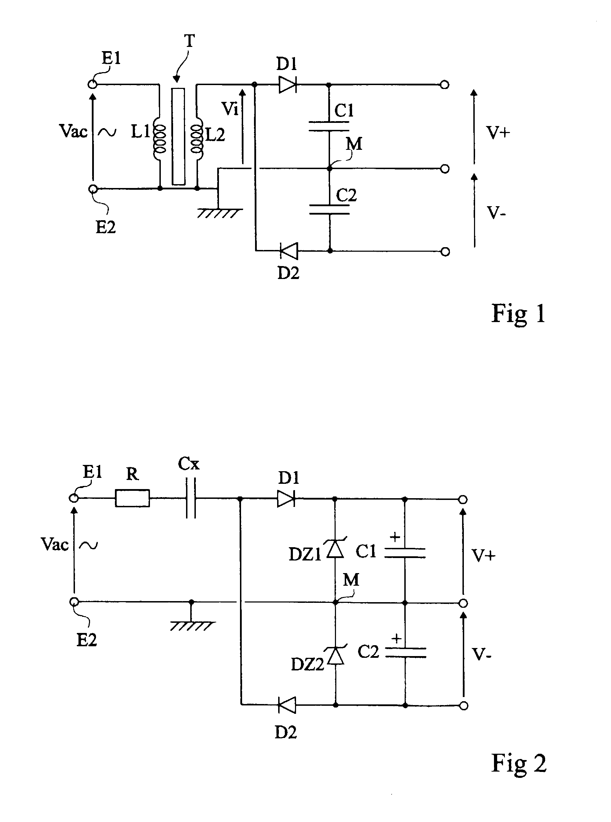

La figure 1 représente un premier exemple d'un convertisseur alternatif/continu (AC/DC) classique à sorties positive et négative. Ce convertisseur utilise un transformateur T dont l'enroulement primaire L1 reçoit sur deux bornes E1 et E2 une tension alternative Vac (par exemple, le secteur 240 V/50 Hz ou 110 V/60 Hz). Les deux bornes du secondaire L2 du transformateur T délivrent une basse tension alternative Vi dont l'amplitude crête correspond approximativement aux valeurs souhaitées pour les tensions V+ et V- de sortie du convertisseur. Chaque tension de sortie V+, V- est prélevée aux bornes d'un condensateur, respectivement C1, C2. Chaque condensateur est connecté, en série avec une diode, respectivement D1, D2, sur l'enroulement secondaire L2 du transformateur. L'anode de la diode D1 et la cathode de la diode D2 sont connectées à la borne haute de l'enroulement L2. Le point commun M des condensateurs C1 et C2, qui constitue la référence des tensions V+ et V-, est connecté à la borne d'entrée E2.

La figure 2 représente un deuxième exemple classique de convertisseur alternatif-continu propre à délivrer deux tensions de sortie V+ et V- de signes opposés. Un condensateur haute tension Cx est connecté par l'intermédiaire d'une résistance R de faible valeur à la borne d'entrée E1. La deuxième borne du condensateur Cx est connectée par l'intermédiaire de diodes de redressement D1, D2 à des condensateurs basse tension C1 et C2 dont les deuxièmes bornes sont reliées à une borne de référence M connectée à la borne E2. Une diode Zener, DZ1, DZ2, est en parallèle sur chacun des condensateurs C1, C2. Le condensateur Cx a une valeur faible devant celle de chacun des condensateurs C1, C2 de façon à opposer une impédance élevée aux variations de la tension d'entrée.

Les convertisseurs décrits ci-dessus sont relativement simples à mettre en oeuvre en raison du faible nombre de composants utilisés. Cependant, ces convertisseurs ont pour inconvénient essentiel leur encombrement et leur coût.

Pour le convertisseur de la figure 1, le coût élevé et le volume important proviennent du transformateur. De plus, il apparaît des pertes non négligeables même en l'absence de débit (pertes fer du transformateur).

Pour le convertisseur de la figure 2, le coût et l'encombrement sont liés au condensateur devant supporter la tension du réseau de distribution. Ce convertisseur engendre de plus des pertes non négligeables.

La présente invention propose une nouvelle solution pour réaliser un convertisseur d'une haute tension alternative en deux basses tensions continues symétriques, qui pallie les inconvénients des solutions connues.

L'invention vise, en particulier, à proposer une nouvelle solution dont l'encombrement soit minimisé.

L'invention vise également une solution qui respecte les contraintes de compatibilité électromagnétique.

La présente invention propose également un nouveau convertisseur qui s'adapte automatiquement au besoin en courant de la charge. Plus particulièrement, la présente invention propose une solution adaptée à une large plage de courants, c'est-à-dire qui permette, si besoin, de délivrer des courants sensiblement plus importants que les solutions classiques sans engendrer de pertes notables.

La présente invention vise en outre à améliorer la régulation de la tension de sortie du convertisseur.

Pour atteindre ces objets, la présente invention prévoit un convertisseur recevant une tension alternative entre une borne d'entrée et une borne de référence et fournissant deux tensions continues de polarités opposées aux bornes d'un premier et d'un deuxième condensateur dont une borne commune est reliée à la borne de référence. Ce convertisseur comprend un premier interrupteur unidirectionnel connecté entre la borne d'entrée et un noeud du circuit ; un troisième condensateur, connecté, en parallèle avec le premier condensateur, entre ledit noeud et la borne de référence ; un moyen de circuit comprenant un deuxième interrupteur pour connecter le deuxième condensateur en série avec le troisième condensateur quand le deuxième interrupteur est fermé ; et un circuit de commande pour fermer le premier interrupteur seulement au début et à la fin d'alternances de polarité donnée, le deuxième interrupteur étant ouvert quand le premier interrupteur est fermé.

Selon un mode de réalisation de la présente invention, le moyen de circuit comprend une source de courant commandable pour assurer le passage d'un courant constant.

Selon un mode de réalisation de la présente invention, le deuxième interrupteur est connecté entre ledit noeud et la borne de référence.

Selon un mode de réalisation de la présente invention, le premier condensateur est connecté audit noeud par l'intermédiaire d'une première diode, le troisième condensateur étant connecté, par l'intermédiaire d'une troisième diode à la borne de référence.

Selon un mode de réalisation de la présente invention, une deuxième diode est connectée entre le deuxième condensateur et le point de raccordement du troisième condensateur et de la troisième diode.

Selon un mode de réalisation de la présente invention, le circuit de commande reçoit une information sur la tension continue aux bornes du premier condensateur et commande le premier interrupteur de sorte que cette tension continue soit sensiblement constante.

Selon un mode de réalisation de la présente invention, le premier interrupteur est commandable en tension ou en courant à l'ouverture et à la fermeture et est apte à bloquer la tension du secteur en direct ou en inverse quand il n'est pas commandé à l'état passant.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 et 2, décrites précédemment, sont destinées à exposer l'état de la technique et le problème posé ;
les figures 3A et 3B représentent, de façon très schématique, un mode de réalisation d'un convertisseur alternatif-continu selon la présente invention ; et
les figures 4A à 4D illustrent, sous forme de chronogrammes, le fonctionnement d'un convertisseur selon la présente invention.

Les mêmes éléments ont été désignés par les mêmes références aux différentes figures. Pour des raisons de clarté, seuls les éléments du convertisseur qui sont nécessaires à la compréhension de l'invention ont été représentés et seront décrits par la suite.

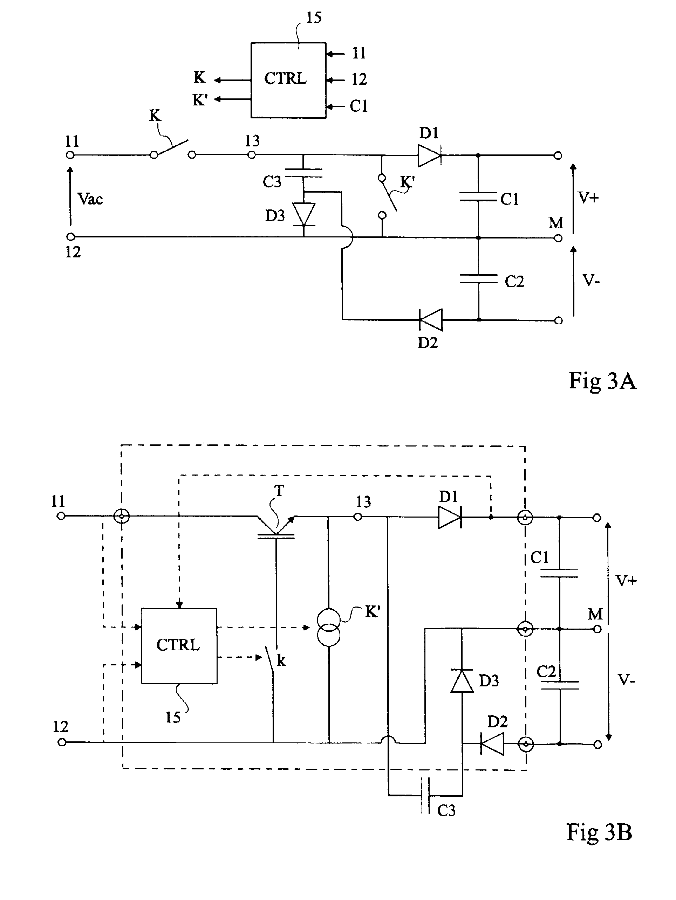

Comme l'illustre schématiquement la figure 3A, un convertisseur selon la présente invention reçoit sur deux bornes d'entrée 11 et 12 une tension alternative, la borne 12 constituant une borne de référence. Les tensions continues de sortie V+ et V-, respectivement positive et négative, sont disponibles aux bornes de condensateurs C1 et C2 qui ont une borne commune M constituant la borne de référence du convertisseur, reliée à la borne 12.

Un interrupteur unidirectionnel K est connecté par son anode à une borne 11 et par sa cathode à une borne 13. Entre les bornes 13 et 12 sont disposés en parallèle le condensateur C1 en série avec une diode D1, et un condensateur C3 en série avec une diode D3. Les diodes D1 et D3 sont polarisées pour être conductrices quand la borne 13 est positive par rapport à la borne 12. L'anode de la diode D1 est connectée à la borne 13. La cathode de la diode D3 est connectée à la borne 12. Une diode D2 est reliée par son anode à la borne du condensateur C2 non reliée au point M et par sa cathode au point de connexion du condensateur C3 et de la diode D3. Un interrupteur K' est connecté entre les bornes 13 et 12.

Les interrupteurs K et K' sont commandés par un circuit de commande 15 (CTRL) qui est relié aux bornes 11 et 12 d'où il reçoit son alimentation et une information sur la tension alternative d'entrée. Le circuit de commande 15 reçoit également (dans le but de réguler la valeur de la tension de sortie) une information sur la tension présente aux bornes du condensateur C1.

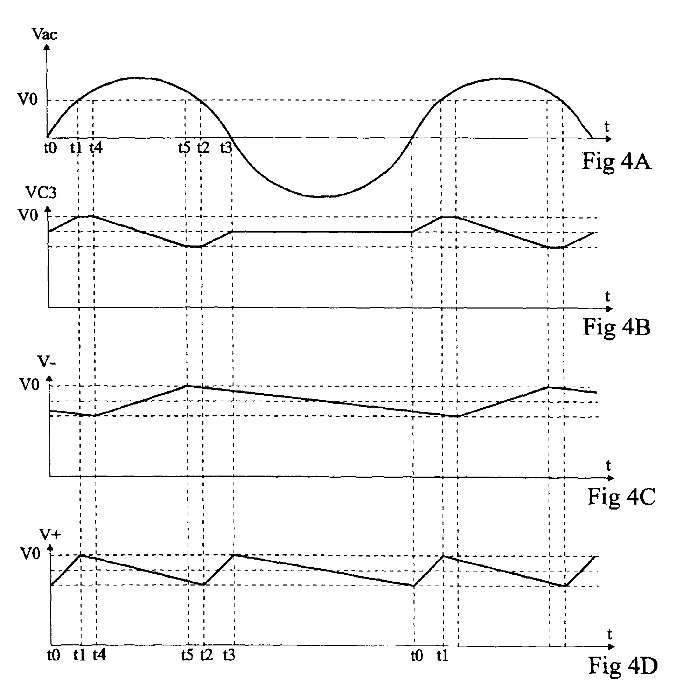

Le fonctionnement d'un convertisseur selon l'invention sera décrit en relation avec les figures 4A à 4D. Ces figures représentent, sous forme de chronogrammes, un exemple d'allure des tensions caractéristiques du convertisseur selon l'invention. La figure 4A représente la tension alternative Vac. La figure 4B représente la tension VC3 aux bornes du condensateur C3. La figure 4C représente la tension de sortie V- aux bornes du condensateur C2. La figure 4D représente la tension de sortie V+ aux bornes du condensateur C1. Par souci de simplification et sauf précision contraire, on ne tient pas compte des chutes de tension dans les diodes du circuit.

Dans l'exposé qui suit du fonctionnement du convertisseur de l'invention, on se place en régime établi, le régime transitoire de charge initiale des condensateurs C1 et C2 se déduit de ce fonctionnement en tenant compte du fait que les niveaux de tension peuvent mettre plusieurs alternances avant d'être atteints.

Selon l'invention, le circuit 15 commande l'interrupteur K pour que celui-ci ne soit fermé qu'au début et à la fin de chaque alternance positive de la tension Vac, pendant des périodes t₀-t₁ en début d'alternance et t₂-t₃ en fin d'alternance. L'interrupteur K' est ouvert pendant ces périodes.

Entre les instants t₀ et t₁, les diodes D1 et D3 sont polarisées en direct. Par conséquent, le courant traversant l'interrupteur K charge le condensateur C1 (figure 4D) ainsi que le condensateur C3 (figure 4B). Par contre, le condensateur C2 continue à se décharger dans la charge (non représentée) connectée à ses bornes (figure 4C).

A l'instant t₁, le circuit 15 provoque l'ouverture de l'interrupteur K par suite de la détection du fait que la tension V+ a atteint la valeur V0 désirée. Le condensateur C1 commence à se décharger tandis qu'il fournit la tension V+ à une charge. L'énergie d'alimentation des charges est alors fournie par les condensateurs C1 et C2. La tension d'alimentation aux bornes du condensateur C3 reste cependant constante entre t₁ et t₄ et entre t₅ et t₂.

A un instant t₄ légèrement postérieur à l'instant t₁, le circuit 15 provoque la fermeture de l'interrupteur K'. Il en découle une décharge du condensateur C3 dans le condensateur C2 par le trajet C3, K', C2, D2. Ainsi les tensions aux bornes des condensateurs C2 et C3 s'équilibrent. De préférence, il est prévu, en série avec l'interrupteur K' un circuit (non représenté en figure 3A) propre à assurer une décharge à courant constant.

Le retard à la fermeture de l'interrupteur K' par rapport à l'ouverture de l'interrupteur K (instants t₁ à t₄) a pour objet d'éviter tout risque de conduction simultanée de ces interrupteurs, ce qui aurait pour effet de mettre en court-circuit l'alimentation alternative. Pour la même raison, l'interrupteur K' est ouvert, au voisinage de la fin de l'alternance, à un instant t₅ antérieur à l'instant t₂ de fermeture de l'interrupteur K.

De l'instant t₂ à l'instant t₃ correspondant à la fin de l'alternance, les condensateurs C1 et C3 complètent leurs charges respectives.

Pendant les alternances négatives, entre les instants t₃ et t₀, les condensateurs C1 et C2 alimentent les charges non représentées qui leur sont connectées, l'interrupteur K étant ouvert et l'interrupteur K' étant optionnellement ouvert ou fermé.

Par souci de simplification, on a supposé des charges purement résistives. Le convertisseur de l'invention n'est cependant pas limité à de telles charges.

On notera que, comme le circuit 15 a pour rôle de réguler le courant prélevé par l'interrupteur K sur l'alimentation alternative, afin de maintenir une tension V+ = V0 à chaque fin de période de charge en début d'alternance (instant t₁), le convertisseur de l'invention s'adapte bien à une variation de l'énergie requise par l'une des charges.

La figure 3B représente le même circuit que la figure 3A. Les éléments ont été disposés de sorte que tous les composants faisant partie d'une même puce de silicium sont disposés à l'intérieur d'un cadre 21. Les seuls éléments non-intégrés sont alors les condensateurs C1, C2 et C3. L'interrupteur K a été représenté sous forme d'un composant T tel qu'un transistor bipolaire à grille isolée (IGBT) associé un commutateur de grille k. De façon générale, le composant T est un interrupteur laissant passer le courant dans une seule direction, commandable en tension ou en courant à l'ouverture et à la fermeture, apte à bloquer la tension du secteur en inverse, et en direct quand il n'est pas à l'état passant. L'interrupteur K' a été représenté sous forme d'une source de courant commandée pour être bloquée ou active.

Un avantage de la présente invention est qu'aucun courant n'est prélevé sur l'alimentation alternative en dehors du voisinage du passage par zéro d'une alternance. L'invention minimise donc la puissance dissipée du circuit en limitant les périodes de prélèvement d'énergie sur le réseau au voisinage du zéro des alternances et évite la génération d'impulsions de courant importantes à l'ouverture et à la fermeture de l'interrupteur K.

Un autre avantage de l'invention est de ne pas nécessiter l'utilisation de composants passifs de puissance haute tension.

Un autre avantage de l'invention est que les tensions de sortie V+ et V- sont régulées par rapport au neutre 12 de la tension alternative Vac.

Bien entendu, la présente invention est susceptible de diverses variantes et modifications qui apparaîtront à l'homme de l'art. De plus, bien que l'invention ait été décrite ci-dessus en relation avec un interrupteur K fonctionnant en monoalternance, on pourra effectuer, en amont, un redressement double alternance au moyen d'un pont de diodes.

## Revendications

1. Convertisseur recevant une tension alternative (Vac) entre une borne d'entrée (11) et une borne de référence (12) et fournissant deux tensions continues de polarités opposées (V+, V-) aux bornes d'un premier (C1) et d'un deuxième (C2) condensateur dont une borne commue est reliée à la borne de référence, caractérisé en ce qu'il comprend :
un premier interrupteur unidirectionnel (K) connecté entre la borne d'entrée (11) et un noeud (13) du circuit ;
un troisième condensateur (C3), connecté, en parallèle avec le premier condensateur, entre ledit noeud (13) et la borne de référence (12) ;
un moyen de circuit comprenant un deuxième interrupteur (K') pour connecter le deuxième condensateur en série avec le troisième condensateur (C3) quand le deuxième interrupteur (K') est fermé ; et
un circuit de commande (15) pour fermer le premier interrupteur seulement au début et à la fin d'alternances de polarité donnée, le deuxième interrupteur étant ouvert quand le premier interrupteur est fermé.

2. Convertisseur selon la revendication 1, caractérisé en ce que le moyen de circuit comprend une source de courant commandable pour assurer le passage d'un courant constant.

3. Convertisseur selon la revendication 1 ou 2, caractérisé en ce que le deuxième interrupteur (K') est connecté entre ledit noeud (13) et la borne de référence (12).

4. Convertisseur selon l'une quelconque des revendications 1 à 3, caractérisé en ce que le premier condensateur (C1) est connecté audit noeud par l'intermédiaire d'une première diode (D1), le troisième condensateur (C3) étant connecté, par l'intermédiaire d'une troisième diode (D3) à la borne de référence (12).

5. Convertisseur selon la revendication 4, caractérisé en ce qu'une deuxième diode (D2) est connectée entre le deuxième condensateur (C2) et le point de raccordement du troisième condensateur (C3) et de la troisième diode (D3).

6. Convertisseur selon la revendication 1, caractérisé en ce que le circuit de commande reçoit une information sur la tension continue aux bornes du premier condensateur et commande le premier interrupteur de sorte que cette tension continue soit sensiblement constante.

7. Convertisseur selon la revendication 1, caractérisé en ce que le premier interrupteur (K) est commandable en tension ou en courant à l'ouverture et à la fermeture et est apte à bloquer la tension du secteur en direct ou en inverse quand il n'est pas commandé à l'état passant.
